# EUROPÄISCHE PATENTSCHRIFT

(11) **EP 0 661 125 B1**
(45) Veröffentlichungstag und Bekanntmachung des Hinweises auf die Patenterteilung: **06.05.1998**
(21) Anmeldenummer: 93120851.6
(22) Anmeldetag: 23.12.1993
(51) Int. Cl.: B26F 3/00, B23P 17/02, B23D 31/00, F15B 1/00

(54) **Vorrichtung zum Bruchtrennen von Pleueln**
Apparatus for fracturing connecting rods
Appareil pour casser des bielles

(43) Veröffentlichungstag der Anmeldung: 05.07.1995
(73) Patentinhaber: Alfing Kessler Sondermaschinen GmbH, D-73413 Aalen (DE)
(72) Erfinder: Hähnel, Michael, Dipl.-Ing. (FH), D-73434 Aalen (DE); Fauser, Nikolaus, D-73489 Jagstzell (DE)
(74) Vertreter: Kohlmann, Karl Friedrich, Dipl.-Ing.

(56) Entgegenhaltungen:
- DE-U- 9 210 167
- US-A- 2 356 366

## Beschreibung

Die vorliegende Erfindung betrifft eine Vorrichtung zum Bruchtrennen von Pleueln
- mit einem ortsfesten Spreizbacken,
- mit einem beweglichen Spreizbacken,
- mit einer Spreizeinrichtung in Form eines Spreizkeiles zum Auseinanderdrücken der Spreizbacken, und
- mit einer eine hydraulische Kolben-Zylinder-Einheit aufweisenden Betätigungseinrichtung zum Aufbringen einer Spreizkraft auf den Spreizkeil.

Es ist bekannt, daß die Qualität von Bruchtrennergebnissen beim Bruchtrennen von Pleueln unter anderem von der Geschwindigkeit des Trennvorganges abhängt. Aus diesem Grund ist bei einer bekannten Verfahrensweise und Vorrichtung anderer Gattung (vgl. DE-GBM 89 05 863) bereits vorgeschlagen worden, die Bruchtrennkraft schlagartig auf die Spreizbacken und damit auf das Pleuelmaterial im Trennquerschnitt einwirken zu lassen. Dieses schlagartige Einwirken wird bei dieser bekannten Verfahrensweise und Vorrichtung durch eine durch Schwerkraft oder in anderer Weise beschleunigte Schlagmasse erzielt, die einen geraden zentralen Stoß auf eine Schlittenanordnung ausübt, auf der ein beweglicher Spreizbacken befestigt ist.

Mit Schlagmassen und Schlittenanordnungen ausgestattete Vorrichtungen erbringen zwar hervorragende Bruchtrennergebnisse, eignen sich jedoch insbesondere für solche Anwendungsbereiche, bei denen die Möglichkeit einer freien Anordnung besteht und keine beengten Platzverhältnisse vorliegen. So ist es bei einer derartigen bekannten Vorrichtung beispielsweise erforderlich, die im Prinzip einseitig gehaltenen, d.h. auskragenden Spreizbacken im Bereich ihrer freien Enden, also im beengten Bereich durch Abstützelemente, wie Klammern und dergleichen zu stützen, um eine Biegung der Spreizbacken zu verhindern.

In der Praxis werden daher bei Vorliegen beengter Platzverhältnisse, wie sie beispielsweise bei Transferstraßen oder Anwendungen mit automatischem, getakteten Betrieb vorhanden sind, Vorrichtungen der gattungsgemäßen Art eingesetzt, bei denen die Bruchtrennkraft mit Spreizkeilen erzeugt wird, die mittels einer hydraulischen Kolben-Zylinder-Einheit die Spreizbacken auseinanderdrücken. Bei derartigen Vorrichtungen müssen im beengten Bereich des großen Pleuelauges lediglich die gut innerhalb der Spreizbacken anzuordnenden Spreizkeile untergebracht werden, während die zu deren Betätigung erforderlichen Teile, wie die hydraulische Kolben-Zylinder-Einheit ohne weiteres außerhalb der beengten Bereiche angeordnet werden können. Abstützelemente, wie Klammern und dergleichen sind aufgrund der Abstützwirkung des Spreizkeiles bei derartigen Konstruktionen nicht erforderlich.

Bei einer Vorrichtung dieser Art (vgl. beispielsweise DE-GBM 92 10 167) steht beispielsweise der Spreizkeil zum Auseinanderdrücken der Spreizbacken über eine Schubstange direkt mit der hydraulischen Kolben-Zylinder-Einheit in Verbindung. Damit ist eine statisch starre und unmittelbare Übertragung der Bewegung des Kolbens der Einheit auf den Spreizkeil sichergestellt, was sich positiv auf die Arbeitsgeschwindigkeit der Vorrichtung auswirkt.

Aufgabe der vorliegenden Erfindung ist es nun, eine Vorrichtung der eingangs geschilderten, mit Spreizkeil arbeitenden Gattung derart weiterzubilden, daß bei möglichst einfachem, technischem Aufbau ein möglichst schneller Bruchtrennvorgang realisiert werden kann.

Diese Aufgabe wird erfindungsgemäß dadurch gelöst, daß die Betätigungseinrichtung einen Kraftspeicher sowie ein zwischen dem Kraftspeicher und der Kolben-Zylinder-Einheit angeordnetes Steuerventil umfaßt, über das im Kraftspeicher unter Druck gespeichertes Hydraulikmedium schlagartig in die Kolben-Zylinder-Einheit einspeisbar ist.

Der Erfindung liegt der Gedanke zugrunde, durch die Anordnung eines Kraftspeichers und eines zwischen diesem und der Kolben-Zylinder-Einheit angeordneten speziellen Steuerventiles die Arbeitsweise der Kolben-Zylinder-Einheit derart "schnell" zu gestalten, daß eine der mit Schlagmassen und Schlittenanordnung arbeitenden Vorrichtungsgattung möglichst nahekommende "schlagartig" ablaufende Arbeitsweise erzielt und damit ein hinsichtlich seiner Qualität hochwertiges Bruchtrennergebnis mit einfachen technischen Mitteln erreicht wird. Durch diese Arbeitsweise wird beim Bruchtrennvorgang eine relativ geringe plastische Verformung des Pleuelmaterials im Bereich der Bruchebene sichergestellt, die einem sogenannten Sprödbruch sehr nahe kommt.

Zwar wird bei einer bekannten Verfahrensweise und Vorrichtung zum Bruchtrennen von Pleueln (vgl. DE 40 22 860) mittels einer als Energiespeicher bezeichneten Kolben-Zylinder-Einheit bereits über eine sehr kurze Zeitspanne eine Bruchtrennkraft auf einen beweglichen Spreizbacken ausgeübt. Bei diesem Energiespeicher handelt es sich jedoch nicht um einen Kraftspeicher im Sinne der vorliegenden Erfindung, sondern um Kolben-Zylinder-Einheit in Form einer Differentialkolbenanordnung, bei der zur Durchführung der Bruchtrennkraft ein Kolbenabschnitt großen Durchmessers eines ersten Kolbens mit Druckluft beaufschlagt wird und ein Kolbenabschnitt kleineren Durchmessers dieses ersten Kolbens auf eine Hydraulikflüssigkeit wirkt, die ihrerseits auf eine Kolbenfläche größeren Durchmessers eines zweiten Kolbens einwirkt, welcher die Bruchtrennkraft über ein Gestänge nach Art eines Schlages direkt auf den beweglichen Spreizbacken überträgt. Derartige bekannte Vorrichtungen arbeiten im Prinzip mit einer Schlagmasse und Schlittenanordnungen und eignen sich deshalb insbesondere für Anwendungsbereiche, bei denen die Möglichkeit einer freien Anordnung besteht und keine beengten Platzverhältnisse vorliegen.

Zwar besitzen die bekannten Verfahrensweisen und Vorrichtungen nach der DE 40 22 860 ebenfalls einen Spreizkeil, der zum Auseinanderdrücken der Spreizbacken eingerichtet ist. Dieser Spreizkeil steht jedoch nicht mit der beschriebenen Differentialkolbenanordnung in Verbindung, sondern dient lediglich über eine separate Zugeinrichtung zum Vorspannen der Spreizbacken vor dem eigentlichen Bruchtrennvorgang.

Vorteilhaft ist es, wenn als Kraftspeicher ein Hochdruckbehälter eingesetzt wird, dessen Innenraum über eine Trennmembrane in zwei Kammern unterteilt ist, von denen die eine mit Hydraulikmedium und die andere mit einem Druckgas gefüllt ist. Derartige Kraftspeicher sind bekannt und haben sich in der Praxis für mannigfaltige Anwendungsgebiete bereits bewährt. Als Druckgas wird meist Stickstoff eingesetzt.

Grundsätzlich kann das Steuerventil in jeder beliebigen Weise ausgestaltet sein. Wesentlich ist lediglich, daß das Steuerventil derart konzipiert ist, daß innerhalb einer kurzen Zeitspanne, d.h. schlagartig ein relativ großer Durchströmquerschnitt für das Hydraulikmedium zur Verfügung steht, damit das im Kraftspeicher gespeicherte Hydraulikmedium möglichst schlagartig in die Kolben-Zylinder-Einheit eingespeist werden kann. Vorteilhaft ist es deshalb, wenn als Steuerventil ein sogenanntes Zwei-Wege-Einbauventil eingesetzt wird. Derartige Ventile werden in der Fachwelt häufig auch als Cartridge-Ventil bezeichnet.

Um das im Kraftspeicher unter Druck gespeicherte Hydraulikmedium möglichst schlagartig in die Kolben-Zylinder-Einheit einspeisen zu können, ist es vorteilhaft, daß sowohl zwischen Kraftspeicher und Steuerventil als auch zwischen Steuerventil und Kolben-Zylinder-Einheit möglichst kurz bemessene Verbindungsleitungen mit geringem hydraulischem Widerstand angeordnet werden.

Für eine möglichst verlustfreie Umsetzung des unter Druck in die Kolben-Zylinder-Einheit eingespeisten Hydraulikmediums ist es vorteilhaft, wenn die Kolben-Zylinder-Einheit mit einem Abflußventil mit großem Steuerquerschnitt ausgestattet ist, damit dem unter Druck eingespeisten Hydraulikmedium auf der Abflußseite kein Gegendruck entgegenwirkt. Vorteilhaft ist es in diesem Zusammenhang, wenn die Steuerung derart gestaltet ist, daß das Abflußventil bereits geöffnet ist, wenn das unter Druck stehende Hydraulikmedium in die Kolben-Zylinder-Einheit eingespeist wird.

Mit unter Druck stehendem Hydraulikmedium arbeitende Hydraulikkreise müssen zur Vermeidung von Unfällen gegenüber Rohrbrüchen, Ventilausfällen oder dergleichen abgesichert sein. Vorteilhaft ist es in diesem Zusammenhang unter anderem, zwischen dem Kraftspeicher und dem Steuerventil eine Sicherheitseinrichtung vorzusehen, mit der der Kraftspeicher automatisch im Bedarfsfalle vom übrigen Hydraulikkreis abgekoppelt werden kann. Als Mindestausstattung ist es vorteilhaft, eine derartige Sicherheitseinrichtung mit einem Absperrventil und einem Überdruckventil auszustatten.

Um hochwertige Bruchtrennergebnisse zu erreichen, müssen zum einen die Spreizbacken an der Innenfläche des großen Pleuelauges spielfrei anliegen, zum anderen die in der Kraftübertragungskette für den Bruchvorgang liegenden Teile der Vorrichtung spielfrei aneinanderschließen. Für diesen Vorgang, der in der Fachwelt allgemein als "Vorspannen" bezeichnet wird, ist es vorteilhaft, eine Vorspanneinrichtung vorzusehen. Diese Vorspanneinrichtung kann entweder in den Kraftspeicherkreis integriert oder als separater Hydraulikkreis ausgestattet, d.h. von diesem vollkommen unabhängig sein.

Im Falle einer Vorspanneinrichtung mit separatem Hydraulikkreis ist es zweckmäßig, diese derart auszugestalten, daß Hydraulikmedium über eine eigene Hydraulikpumpe direkt in die Kolben-Zylinder-Einheit einspeisbar ist.

Grundsätzlich können die Spreizbacken den jeweiligen konstruktiven Verhältnissen entsprechend in der verschiedensten Weise angeordnet sein. Ein technisch vorteilhafter Aufbau ergibt sich jedoch, wenn der ortsfeste Spreizbacken auf einer ortsfesten Vorrichtungsbasis befestigt ist, die auch die Abstützelemente für die Kappe trägt. Der bewegliche Spreizbacken kann bei einer derartigen Anordnung vorteilhafter Weise auf einer Geradführung angeordnet sein.

Im folgenden sind zur weiteren Erläuterung und zum besseren Verständnis zwei Ausführungsbeispiele der Erfindung unter Bezugnahme auf die beigefügten Zeichnungen näher beschrieben und erläutert.
- Fig. 1: zeigt schematisch in einer vereinfachten Gesamtansicht ein erstes Ausführungsbeispiel einer erfindungsgemäßen Vorrichtung,
- Fig. 2: zeigt eine teilweise geschnittene Ansicht eines Teiles des in Fig. 1 dargestellten Ausführungsbeispieles in vergrößertem Maßstab,
- Fig. 3: zeigt schematisch ein zweites Ausführungsbeispiel einer erfindungsgemäßen Vorrichtung in einer Seitenansicht,
- Fig. 4: zeigt schematisch das in Fig. 3 dargestellte Ausführungsbeispiel in einer Draufsicht, und
- Fig. 5: zeigt schematisch ein Hydraulikschema, wie es sowohl dem ersten als auch dem zweiten Ausführungsbeispiel der erfindungsgemäßen Vorrichtung zugrunde liegt.

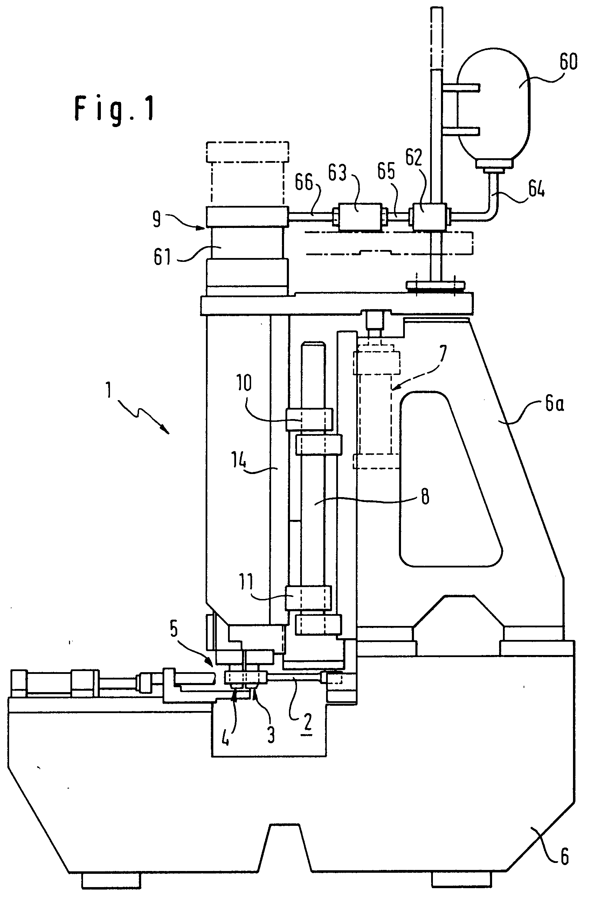

Das in Fig. 1 dargestellte erste Ausführungsbeispiel einer erfindungsgemäßen Vorrichtung 1 ist auf einem Ständerunterteil 6 aufgebaut, wie es bei Transferstraßen zum Einsatz kommt. Auf das Ständerunterteil 6 ist ein rahmenartiges Ständeroberteil 6a aufgesetzt, das eine Führungsanordnung 8 in Form einer vertikalen Geradführung trägt. An der vertikalen Geradführung ist über Führungslaschen 10 und 11 ein beweglicher Rahmen 14 gelagert, der über eine am Ständeroberteil 6a befestigte Hubvorrichtung 7 anhebbar bzw. absenkbar ist.

Der bewegliche Rahmen 14 wiederum trägt eine Spreizeinrichtung 5, die einen ortsfesten, d.h. am beweglichen Rahmen 14 unmittelbar befestigten Spreizbacken 3 sowie einen beweglichen Spreizbacken 4 trägt.

Die Anordnung ist derart getroffen, daß der ortsfeste und der bewegliche Spreizbacken der Spreizeinrichtung 5 über die Hubeinrichtung 7 und den beweglichen Rahmen 14 in das große Auge eines in einer Halterung auf dem Ständeroberteil angeordneten, aus Stange und Kappe bestehenden Pleuels 2 von oben eingesenkt bzw. aus diesem wieder herausgezogen werden kann.

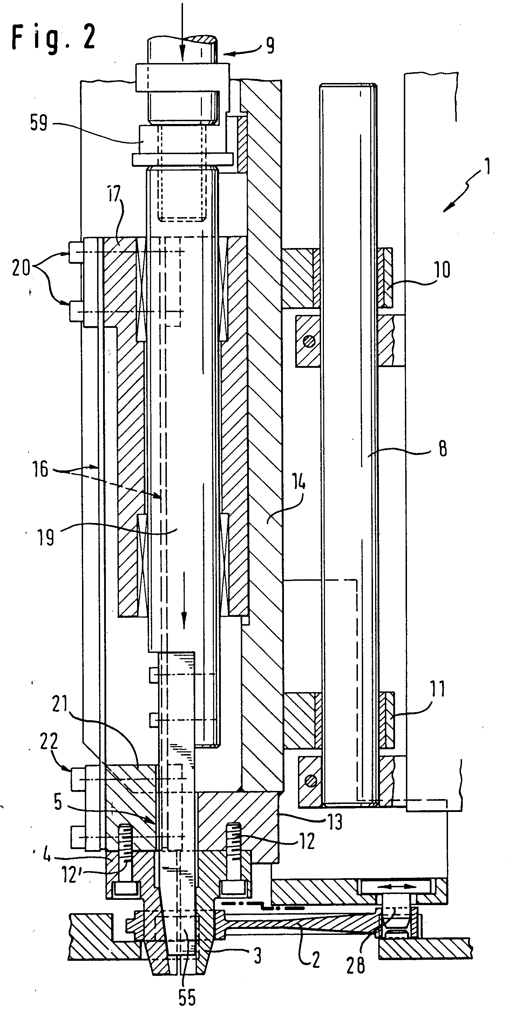

Der genaue Aufbau der Spreizeinrichtung 5 ergibt sich aus Fig. 2. Aus Fig. 2 ist erkennbar, daß der ortsfeste Spreizbacken 3 über Befestigungsschrauben 12 an einem Befestigungssockel 13 des beweglichen Rahmens 14 befestigt ist. Der bewegliche Spreizbacken 4 wiederum ist über Befestigungsschrauben 12' an einem Lagerabschnitt 21 befestigt, der über eine Parallellenkeranordnung 16 über Befestigungsschrauben 20 an einem Halteabschnitt 17 befestigt ist, der einen Teil des beweglichen Rahmens 14 darstellt. Zwischen dem ortsfesten Spreizbacken 3 und dem beweglichen Spreizbacken 4 ist ein Spreizkeil 55 angeordnet, der mit einer Schubstange 19 verbunden ist, die mit einer Betätigungseinrichtung 9 zusammenwirkt, auf welche später noch eingegangen werden wird. Der übrige Aufbau des ersten Ausführungsbeispieles der erfindungsgemäßen Vorrichtung, wie sie in Fig. 2 dargestellt ist, ist in dem deutschen Gebrauchsmuster 92 10 197 beschrieben, auf dessen Offenbarungsgehalt hier ausdrücklich Bezug genommen ist.

Die Betätigungseinrichtung 9 für den Spreizkeil 55 umfaßt einen Kraftspeicher 60 sowie eine Kolben-Zylinder-Einheit 61, deren Kolben mit der Schubstange 19 des Spreizkeiles 55 verbunden ist.

Zwischen dem Kraftspeicher 60 und der Kolben-Zylinder-Einheit 61 sind eine Sicherheitseinrichtung 62 und ein Steuerventil 63 angeordnet. Die Sicherheitseinrichtung 62 und das Steuerventil 63 sind untereinander sowie gegenüber dem Kraftspeicher 60 und der Kolben-Zylinder-Einheit 61 mit möglichst kurz bemessenen Verbindungsleitungen 64, 65 und 66 mit geringem hydraulischem Widerstand verbunden.

Der Kraftspeicher 60 umfaßt einen Hochdruckbehälter, dessen Innenraum über eine Trennmembrane (nicht dargestellt) in zwei Kammern unterteilt ist, von denen die untere Kammer mit Hydraulikmedium und die obere Kammer mit einem Druckgas, vorzugsweise Stickstoff gefüllt ist. Wie bereits erwähnt, sind derartige Kraftspeicher 60 bereits bekannt.

Die Sicherheitseinrichtung 62 stellt ebenfalls eine handelsübliche Einheit dar, die ein Absperrventil und ein Überdruckventil aufweist.

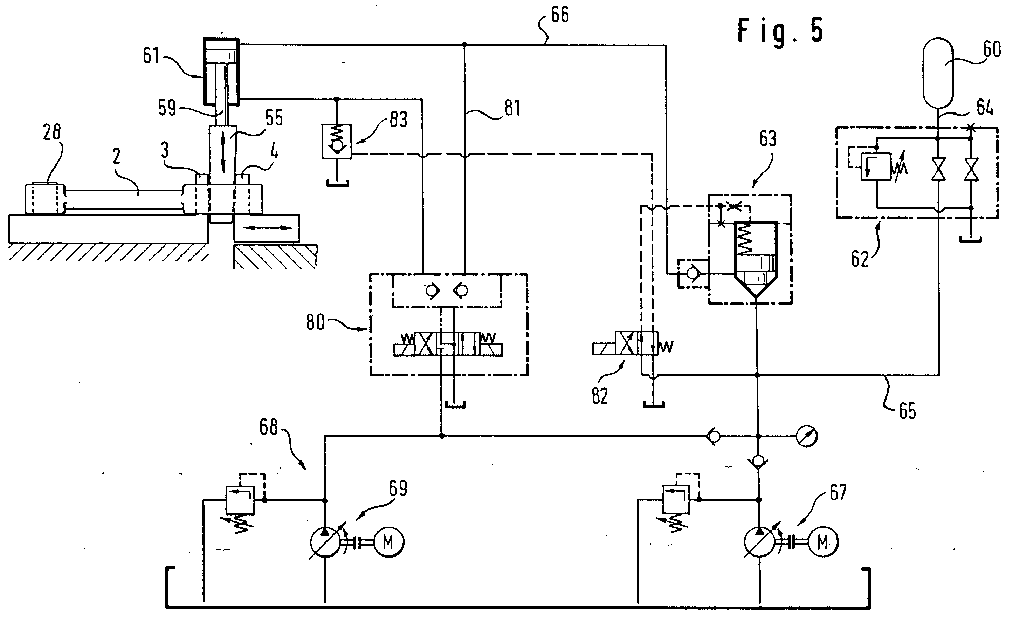

Das Steuerventil 63 wiederum ist als sogenanntes Zwei-Wege-Einbauventil ausgestaltet, mit dem innerhalb einer kurzen Zeitspanne ein relativ großer Durchströmquerschnitt freigegeben werden kann, wie dies noch im Zusammenhang mit dem Hydraulikschema gemäß Fig. 5 beschrieben werden wird.

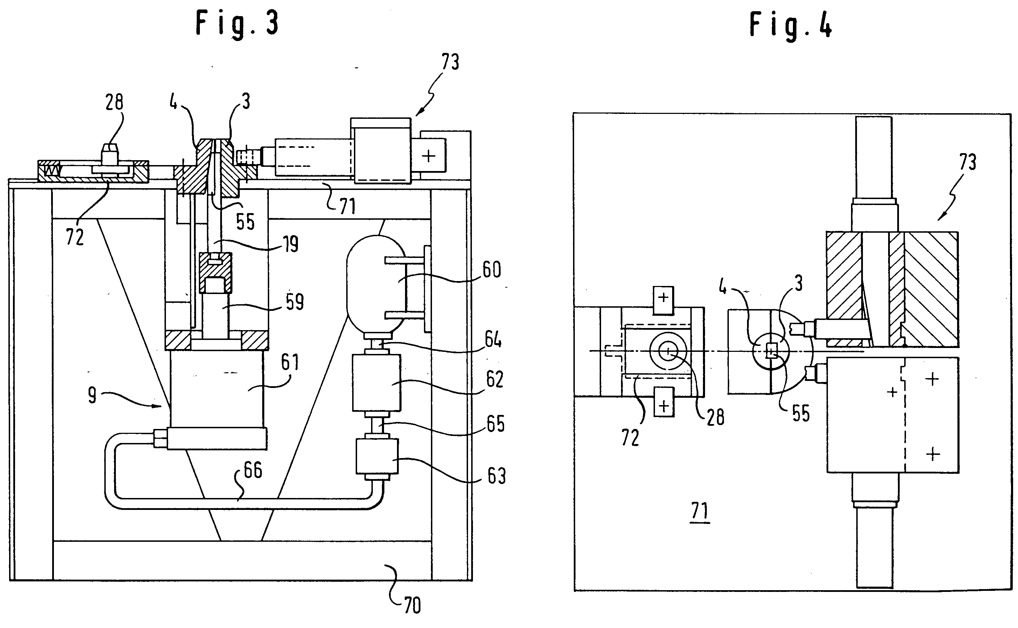

Das in den Fig. 3 und 4 dargestellte zweite Ausführungsbeispiel einer erfindungsgemäßen Vorrichtung besitzt im Prinzip die gleichen Elemente, wie sie im Zusammenhang mit dem ersten Ausführungsbeispiel beschrieben wurden. Die Anordnung ist lediglich derart getroffen, daß die Spreizeinrichtung 5 mit ihren Elementen auf der Oberseite eines rahmenartigen Grundgestelles 70 angeordnet ist und die Betätigungseinrichtung 9 innerhalb dieses Grundgestelles 70 unterhalb der Arbeitsebene für den Bruchtrennvorgang liegt.

Wie insbesondere aus Fig. 3 zu ersehen ist, ist der ortsfeste Spreizbacken 3 fest mit einer auf der Oberseite des Grundgestelles 70 in Form einer als Arbeitsplatte ausgebildeten Vorrichtungsbasis 71 befestigt.

Der bewegliche Spreizbacken 4 wiederum ist auf einer Geradführung 72 gelagert, die ihrerseits eine bewegliche Lagerung für einen Zentrierdorn 28 für das kleine Pleuelauge trägt. Die Geradführung 72, welche eine horizontale Bewegung der beweglichen Spreizbacke 3 ermöglicht, ist auf der Vorrichtungsbasis 71 befestigt.

Zwischen den ortsfesten Spreizbacken 3 und den beweglichen Spreizbacken 4 ragt von unten ein Spreizkeil 55 hinein, der mit einer Schubstange 19 befestigt ist, die ihrerseits mit einem Kolben 62 einer Kolben-Zylinder-Einheit 61 der Betätigungseinrichtung 9 in Verbindung steht.

Die Kolben-Zylinder-Einheit 61 wiederum ist über eine Leitung 64 mit einem Steuerventil 63 verbunden, das seinerseits mit einer Sicherheitseinrichtung 62 in Verbindung steht, die ihrerseits am Ausgang eines Kraftspeichers 60 angeordnet ist.

Wie aus den Fig. 3 und 4 hervorgeht, ist auf der Vorrichtungsbasis 71 noch eine Anschlaganordnung zum Einspannen des Pleuels angeordnet, auf die jedoch im vorliegenden Fall nicht näher eingegangen werden soll.

Das in Fig. 5 dargestellte Hydraulikschema, welches sowohl dem ersten als auch dem zweiten Ausführungsbeispiel zugrundeliegt, zeigt ein Pleuel 2, in dessen kleines Pleuelauge der Zentrierbolzen 28 und in dessen großes Pleuelauge der ortsfeste Spreizbacken 3 und der bewegliche Spreizbacken 4 eingreifen. Zwischen die Spreizbacken 3 und 4 ragt der Spreizkeil 55 hinein, der mit dem Kolben der Kolben-Zylinder-Eiheit 61 verbunden ist.

Das Hydraulikschema zeigt ferner den Kraftspeicher 60, der mit der Sicherheitseinrichtung 62 in Verbindung steht, die in bekannter Weise ein Absperrventil und ein Überdruckventil aufweist.

Mit der Sicherheitseinrichtung 62 ist über eine Leitung 65 das Steuerventil 63 verbunden, welches seinerseits über die Leitung 66 mit der Kolben-Zylinder-Einheit 61 in Verbindung steht.

Wie aus Fig. 5 erkennbar, umfaßt die Anordnung ferner eine Hauptpumpe 67, mit der Hydraulikmedium zum Aufbau einer Speicherkraft über die Leitung 65 und die Sicherheitseinrichtung 62 in den Kraftspeicher 60 eingespeist werden kann. Ferner ist eine Vorspanneinrichtung 68 vorgesehen, mit der Hydraulikmedium über ein Wegeventil 80 über eine Leitung 81 in die Kolben-Zylinder-Einheit 61 zum Vorspannen eingespeist werden kann.

Die Anordnung enthält darüber hinaus ein Wegeventil 82, mit dem einerseits das Steuerventil 63 und andererseits ein Abflußventil 83 gesteuert werden kann, das mit der Kolben-Zylinder-Einheit 61 in Verbindung steht.

Der Bruchtrennvorgang läuft nun wie folgt ab: Zuerst wird der Kraftspeicher 60 über die Hauptpumpe 67 auf seinen Betriebsdruck gebracht. Im Anschluß daran oder parallel hierzu wird die Spreizeinrichtung 5 vorgespannt, d.h. Hydraulikmedium über die Hydraulikpumpe 69 der Vorspanneinrichtung 68 über das Wegeventil 80 und die Leitungen 81 und 66 bis zu einem bestimmten Druck in die Kolben-Zylinder-Einheit 61 eingespeist. Durch dieses Vorspannen liegen der ortsfeste Spreizbacken 3 und der bewegliche Spreizbacken 4 spielfrei an der Innenfläche des großen Auges des Pleuels 2 an. Der Pleuel kann dabei mit einer definierten hohen Kraft vorgespannt werden. Diese Kraft muß allerdings derart bemessen werden, daß die aus der Vorspannkraft resultierenden Materialdehnungen im elastischen Bereich bleiben. Die Überwindung eines Teiles der Elastizität des Pleuelmaterials hat zur Folge, daß der anschließend durchzuführende Bruchtrennvorgang beschleunigt abläuft.

Dieser Bruchtrennvorgang wird über das Wegeventil 82 eingeleitet.

Dieses Wegeventil 82 öffnet zuerst das Abflußventil 83 und etwas verzögert das Steuerventil 63. Da das Steuerventil 63 derart gestaltet ist, daß es innerhalb einer sehr kurzen Zeitspanne einen relativ großen Durchströmquerschnitt freigibt, kann das im Kraftspeicher 60 gespeicherte Hydraulikmedium über die Leitungen 64, 65 und 66 schlagartig in die Kolben-Zylinder-Einheit fließen und damit der Spreizkeil 55 schlagartig zwischen den ortsfesten Spreizbacken 3 und den beweglichen Spreizbacken 4 hineingetrieben werden. Da das Abflußventil 83 offen ist, wird dieser Bewegung innerhalb der Kolben-Zylinder-Einheit 61 kein nennenswerter Widerstand entgegengesetzt, so daß die freiwerdende Energie den Spreizkeil 55 schlagartig zwischen die Spreizbacken eintreiben kann.

Auf diese Weise läuft der Bruchtrennvorgang derart "schnell" ab, daß eine Arbeitsweise gewährleistet ist, die einer mit Schlagmasse arbeitenden Vorrichtung sehr nahe kommt. Es wird deshalb mit Vorrichtungen der erfindungsgemäßen Art ein hinsichtlich der Qualität hochwertiges Bruchtrennergebnis mit relativ geringem technischen Aufwand erreicht. Das hochwertige Bruchtrennergebnis ist auch darauf zurückzuführen, daß der Spreizkeil 55 auf die beiden Spreizbacken 3 und 4 von innen her eine abstützende Wirkung ausübt und dadurch eine Biegung der beiden im Prinzip einseitig eingespannten Spreizbacken verhindert. Auf diese Weise sind Abstützelemente, wie Spangen oder dergleichen, wie sie bei Vorrichtungen nach dem DE-GBM 89 05 863 erforderlich sind, nicht notwendig.

## Patentansprüche

1. Vorrichtung zum Bruchtrennen von Pleueln (2)
- mit einem ortsfesten Spreizbacken (3),
- mit einem beweglichen Spreizbacken (4),
- mit einer Spreizeinrichtung (5) in Form eines Spreizkeiles (55) zum Auseinanderdrücken der Spreizbacken, und
- mit einer eine hydraulische Kolben-Zylinder-Einheit (61) aufweisenden Betätigungseinrichtung (9) zum Aufbringen einer Spreizkraft auf den Spreizkeil,
**dadurch gekennzeichnet,** daß
die Betätigungseinrichtung (9) einen Kraftspeicher (60) sowie ein zwischen dem Kraftspeicher und der Kolben-Zylinder-Einheit (61) angeordnetes Steuerventil (63)umfaßt, über das im Kraftspeicher unter Druck gespeichertes Hydraulikmedium schlagartig in die Kolben-Zylinder-Einheit (61) einspeisbar ist.

2. Vorrichtung nach Anspruch 1,
**dadurch gekennzeichnet,** daß
der Kraftspeicher (60) einen Hochdruckbehälter umfaßt, dessen Innenraum über eine Trennmembrane in zwei Kammern unterteilt ist, von denen die eine mit Hydraulikmedium und die andere mit einem Druckgas gefüllt ist.

3. Vorrichtung nach Anspruch 1 und 2,
**dadurch gekennzeichnet,** daß
das Steuerventil (63)als 2-Wege-Einbauventil ausgestaltet ist, mit dem innerhalb einer kurzen Zeitspanne ein relativ großer Durchströmquerschnitt freigebbar ist.

4. Vorrichtung nach Anspruch 1 bis 3,
**dadurch gekennzeichnet,** daß
zwischen Kraftspeicher (60) und Steuerventil (63) sowie zwischen Steuerventil (63) und Kolben-Zylinder-Einheit (61) kurz bemessene Verbindungsleitungen (64, 65, 66) mit geringem hydraulischen Widerstand vorgesehen sind.

5. Vorrichtung nach Anspruch 1 bis 4,
**dadurch gekennzeichnet,** daß
die Kolben-Zylinder-Einheit (61) mit einem Abflußventil (83) mit großem Steuerquerschnitt ausgestattet ist.

6. Vorrichtung nach Anspruch 1 oder 2,
**dadurch gekennzeichnet,** daß
zwischen dem Kraftspeicher (60)und dem Steuerventil (63) eine Sicherheitseinrichtung (62)vorgesehen ist.

7. Vorrichtung nach Anspruch 6,
**dadurch gekennzeichnet,** daß
die Sicherheitseinrichtung (62) ein Absperrventil und ein Überdruckventil aufweist.

8. Vorrichtung nach einem oder mehreren der vorhergehenden Ansprüche,
**dadurch gekennzeichnet,** daß
eine Vorspanneinrichtung (68) vorgesehen ist.

9. Vorrichtung nach Anspruch 8,
**dadurch gekennzeichnet,** daß
die Vorspanneinrichtung (68) einen separaten Hydraulikkreis umfaßt, mit dem Hydraulikmedium in die Kolben-Zylinder-Einheit (61) direkt einspeisbar ist.

10. Vorrichtung nach Anspruch 9,
**dadurch gekennzeichnet,** daß
der separate Hydraulikkreis mit einer eigenen Hydraulikpumpe (69) ausgestattet ist.

11. Vorrichtung nach Anspruch 1,
**dadurch gekennzeichnet,** daß
der ortsfeste Spreizbacken (3) auf einer ortsfesten Vorrichtungsbasis (71) befestigt ist, die die Abstützelemente für die Kappe trägt.

12. Vorrichtung nach Anspruch 11,
**dadurch gekennzeichnet,** daß
der bewegliche Spreizbacken (4) auf einer Geradführung (72) angeordnet ist.

13. Vorrichtung nach Anspruch 12,
**dadurch gekennzeichnet,** daß
die Abstützelemente für die Kappe auf der Geradführung angeordnet sind.

## Claims

1. Apparatus for the separation of connecting rods (2) by fracture
- with one stationary expanding jaw (3),
- with one movable expanding jaw (4),
- with an expander (5) in the form of an expanding wedge (55) for forcing apart the expanding jaws, and
- with an actuator (9) comprising a hydraulic piston and cylinder unit (61) for applying an expanding force to the expanding wedge,
characterised in that the actuator (9) includes an energy storing device (60) as well as a control valve (63) which is arranged between the energy storing device and the piston and cylinder unit (61) and via which hydraulic medium stored under pressure in the energy storing device can be fed suddenly to the piston and cylinder unit (61).

2. Apparatus according to claim 1, characterised in that the energy storing device (60) includes a high-pressure vessel whose interior is divided by a dividing diaphragm into two chambers, one of which is filled with hydraulic medium and the other with a compressed gas.

3. Apparatus according to claims 1 and 2, characterised in that the control valve (63) is designed as a two-way cartridge valve with which within a short period of time a relatively large throughflow cross-section can be released.

4. Apparatus according to claims 1 to 3, characterised in that between energy storing device (60) and control valve (63), as well as between control valve (63) and piston and cylinder unit (61), connecting pipes (64, 65, 66) with short dimensions and low hydraulic resistance are provided.

5. Apparatus according to claims 1 to 4, characterised in that the piston and cylinder unit (61) is fitted with an escape valve (83) with a large control cross-section.

6. Apparatus according to claim 1 or 2, characterised in that between the energy storing device (60) and the control valve (63) is provided a safety device (62).

7. Apparatus according to claim 6, characterised in that the safety device (62) has a shut-off valve and an overpressure valve.

8. Apparatus according to one or more of the preceding claims, characterised in that a prestressing device (68) is provided.

9. Apparatus according to claim 8, characterised in that the prestressing device (68) includes a separate hydraulic circuit with which hydraulic medium can be fed directly to the piston and cylinder unit (61).

10. Apparatus according to claim 9, characterised in that the separate hydraulic circuit is fitted with its own hydraulic pump (69).

11. Apparatus according to claim 1, characterised in that the stationary expanding jaw (3) is mounted on a stationary apparatus base (71) which carries the supporting elements for the cap.

12. Apparatus according to claim 11, characterised in that the movable expanding jaw (4) is arranged on a straight-line mechanism (72).

13. Apparatus according to claim 12, characterised in that the supporting elements for the cap are arranged on the straight-line mechanism.

## Revendications

1. Dispositif destiné à sectionner des bielles (2), par rupture, comprenant
- un mors d'écartement fixe (3),
- un mors d'écartement mobile (4),
- un dispositif d'écartement (5) sous la forme d'un coin d'écartement (55) destiné à écarter les mors d'écartement, et
- un mécanisme d'actionnement (9) comprenant une unité hydraulique à piston et cylindre (61) et destiné à appliquer une force d'écartement sur le coin d'écartement,
**caractérisé** en ce que le mécanisme d'actionnement (9) comprend un accumulateur de force (60) ainsi qu'une soupape de commande (63) disposée entre l'accumulateur de force et l'unité à piston et cylindre (61) et par l'intermédiaire de laquelle le fluide hydraulique stocké sous pression dans l'accumulateur de force, peut être envoyé brusquement dans l'unité à piston et cylindre (61).

2. Dispositif selon la revendication 1, **caractérisé** en ce que l'accumulateur de force (60) comprend un réservoir haute pression dont l'espace intérieur est subdivisé par une membrane de séparation, en deux compartiments dont l'un est rempli de fluide hydraulique et l'autre d'un gaz sous pression.

3. Dispositif selon les revendications 1 et 2, **caractérisé** en ce que la soupape de commande (63) est réalisée sous la forme d'un distributeur à deux voies intégré à l'aide duquel il est possible de libérer une section de passage d'écoulement relativement grande en un court intervalle de temps.

4. Dispositif selon la revendication 1 à 3, **caractérisé** en ce qu'entre l'accumulateur de force (60) et la soupape de commande (63), ainsi qu'entre la soupape de commande (63) et l'unité à piston et cylindre (61) sont prévues des conduites de liaison (64, 65, 66) de faible longueur et à faible résistance hydraulique.

5. Dispositif selon la revendication 1 à 4, **caractérisé** en ce que l'unité à piston et cylindre (61) est équipée d'une soupape de décharge (83) à grande section pilote.

6. Dispositif selon la revendication 1 ou 2, **caractérisé** en ce qu'entre l'accumulateur de force (60) et la soupape de commande (63) est prévu un système de sécurité (62).

7. Dispositif selon la revendication 6, **caractérisé** en ce que le système de sécurité (62) comprend une soupape d'arrêt et une soupape de sûreté de pression.

8. Dispositif selon l'une ou plusieurs des revendications précédentes, **caractérisé** en ce qu'il est prévu un mécanisme de mise en précontrainte (68).

9. Dispositif selon la revendication 8, **caractérisé** en ce que le mécanisme de mise en précontrainte (68) comprend un circuit hydraulique séparé, à l'aide duquel du fluide hydraulique peut être envoyé directement dans l'unité à piston et cylindre (61).

10. Dispositif selon la revendication 9, **caractérisé** en ce que le circuit hydraulique séparé est équipé d'une propre pompe hydraulique (69).

11. Dispositif selon la revendication 1, **caractérisé** en ce que le mors d'écartement fixe (3) est fixé sur une base de montage (71) qui porte les éléments de support pour le chapeau.

12. Dispositif selon la revendication 11, **caractérisé** en ce que le mors d'écartement mobile (4) est disposé sur un guidage rectiligne (72).

13. Dispositif selon la revendication 12, **caractérisé** en ce que les éléments de support pour le chapeau sont disposés sur le guidage rectiligne.
